# EUROPEAN PATENT APPLICATION

(11) **EP 2 474 831 A1**
(43) Date of publication of application: **11.07.2012**
(21) Application number: 10813603.7
(22) Date of filing: 10.08.2010
(51) Int. Cl.: G01N 35/04

(54) **CHEMICAL ANALYZER**

(30) Priority: 02.09.2009 JP 2009202909
(71) Applicant: Hitachi High-Technologies Corporation, Tokyo 105-8717 (JP)
(72) Inventor: SEINO Taisaku, Hitachinaka-shi Ibaraki 312-8504 (JP); OKUSA Takenori, Hitachinaka-shi Ibaraki 312-8504 (JP)
(74) Representative: Buchetmann, Dominik
(86) International application number: PCT/JP2010/063586
(87) International publication number: WO 2011/027652

(57) **Abstract**

A chemical analyzer that performs analysis by putting a sample and a reagent into a reaction vessel 3 includes a container for containing a reaction vessel magazine 1 having multiple magazine cells 2. Each of the magazine cells 2 has an opening at each of its two ends and houses a reaction vessel 3, and the openings are sealed with protective films 4 and 5. A cutter 9 is provided in such a way as to face one of the openings of a magazine cell 2 so as to cut the protective film 5 of the magazine cell 2. Also, a pushrod 8 is provided in such a way as to face the other opening of the magazine cell 2 so as to push out the reaction vessel 3 placed inside the cell 2 through the other opening of the cell 2 the cutter 9 faces. Thus, during removal of the reaction vessel 3 from the magazine cell 2, the antibody or antigen layer on the reaction vessel 3 can be prevented from being damaged.

## Description

### Technical Field

The present invention relates to a chemical analyzer that performs analysis by putting a sample and a reagent into a vessel.

### Background Art

Typically, automatic solid-phase immunoassay requires the use of reaction vessels whose inner surfaces have been coated with an antibody or antigen depending on the sample properties to be examined.

Because the antibody or antigen layer on such a reaction vessel is susceptible to changes in the external environment, vessel storage management is crucial. For instance, to prevent a reaction vessel from being exposed to a high-humidity environment, it would be effective to put the vessel into a container with a desiccant and seal the container with a moisture-proof protective film. The vessel will later be taken out from the container immediately before use, so that the vessel can be as little susceptible to changes in the external environment as possible.

For instance, Patent Document 1 discloses a technique for taking out such analysis instruments from a container. According to the technique, at least one end surface of a test strip magazine is provided with multiple chambers each with one hole. Each of the chambers contains a test strip, and all the holes are sealed with a film. To take out a test strip from the magazine, a pushrod is used to push out a test strip from any chamber, during which the film covering the hole of that chamber is penetrated with the test strip.

### Prior Art Literature

### Patent Document

Patent Document 1
   JP-2007-517202-A

### Summary of the Invention

### Problem to be Solved by the Invention

As described above, to take out a test strip from the magazine, the technique of Patent Document 1 uses a pushrod to push the test strip, thereby penetrating the film with that test strip. However, the use of this technique for taking out a reaction vessel or other similar analysis instruments may result in damage to the antibody or antigen layer on the vessel due to the contact with a film.

The present invention has been contrived in view of the above, and one of its objects is to provide a chemical analyzer that prevents damage to the antibody or antigen layer on a reaction vessel during removal of the reaction vessel from its container.

### Means for Solving the Problem

To achieve the above object, the present invention is a chemical analyzer that performs analysis by putting a sample and a reagent into a reaction vessel, the chemical analyzer comprising: a container for containing a reaction vessel magazine having multiple magazine cells, each of the magazine cells having an opening at each of its two ends and housing a reaction vessel, the openings being sealed with protective films; a cutter, positioned to face one of the openings of a magazine cell, for cutting one of the protective films of the magazine cell; and pushing means, positioned to face the other opening of the magazine cell, for penetrating the other protective film of the magazine cell and pushing out the reaction vessel housed in the magazine cell through the opening the cutter faces.

### Effect of the Invention

The present invention prevents damage to the antibody or antigen layer on a reaction vessel during removal of the reaction vessel from its magazine cell.

### Brief Description of the Drawings

FIG. 1 is a perspective view illustrating the external appearance of a reaction vessel magazine according to Embodiment 1.
FIG. 2 is a perspective view of one of the multiple magazine cells that constitute the reaction vessel magazine.
FIG. 3 is a vertical cross-section of a reaction vessel which is to be housed in a magazine cell.
FIG. 4 is a vertical cross-section of a magazine cell housing a reaction vessel.
FIG. 5 is a transparent top view of a magazine cell housing a reaction vessel.
FIG. 6 illustrates the reaction vessel magazine together with the magazine container of a chemical analyzer according to Embodiment 1.
FIG. 7 is a cross-section of the blade of a cutter taken along a plane parallel to protective films;
FIG. 8 is another possible cross-section of the cutter.
FIG. 9 is a vertical cross-section showing the positions of the cutter and a pushrod with respect to a magazine cell.
FIG. 10 is a transparent top view showing the positions of the cutter and the pushrod with respect to a magazine cell.
FIG. 11 is a vertical cross-section illustrating a first phase of the process of taking out a reaction vessel from a magazine cell.
FIG. 12 is a vertical cross-section illustrating a second phase of the process of taking out a reaction vessel from a magazine cell.
FIG. 13 is a vertical cross-section illustrating a third phase of the process of taking out a reaction vessel from a magazine cell.
FIG. 14 is a vertical cross-section illustrating a fourth phase of the process of taking out a reaction vessel from a magazine cell.
FIG. 15 is a perspective view illustrating a first stage of a reaction vessel being taken out of a magazine cell.
FIG. 16 is a perspective view illustrating a second stage of a reaction vessel being taken out of a magazine cell.
FIG. 17 illustrates the penetration angle of the cutter with respect to a magazine cell according to Embodiment 2.
FIG. 18 is a graph showing the relationship between the penetration angle of the cutter and the stress applied to a protective film during film cutting.
FIG. 19 illustrates the penetration angle of a cutter with respect to a magazine cell according to Embodiment 3.
FIG. 20 illustrates the penetration angle of a cutter with respect to a magazine cell according to Embodiment 4.
FIG. 21 illustrates the shape of a cutter according to Embodiment 5.
FIG. 22 illustrates the shape of a cutter according to Embodiment 6.
FIG. 23 illustrates the shape of a cutter according to Embodiment 7.

### Mode for Carrying out the Invention

Embodiments of the present invention will now be described with reference to the accompanying drawings.

### Embodiment 1

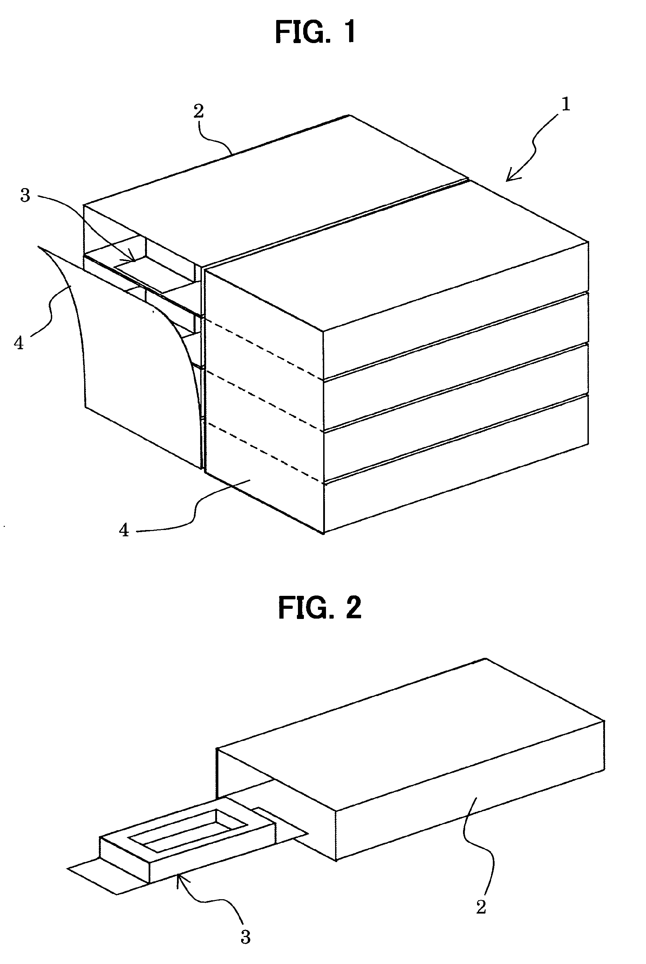

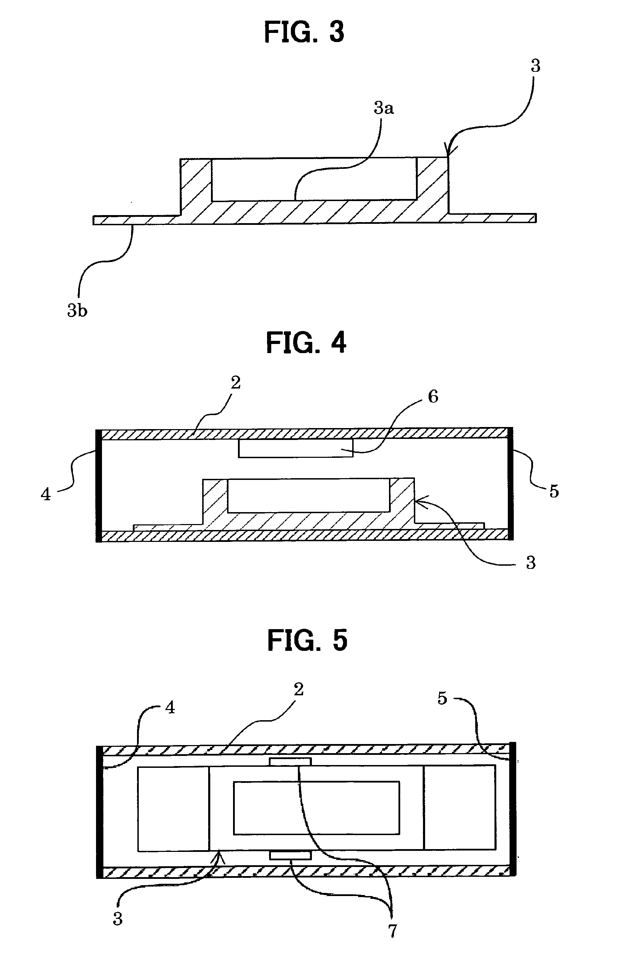

FIG. 1 is a perspective view illustrating the external appearance of a reaction vessel magazine according to Embodiment 1. FIG. 2 is a perspective view of one of the multiple magazine cells that constitute the reaction vessel magazine, and FIG. 3 is a vertical cross-section of a reaction vessel which is to be housed in a magazine cell. FIG. 4 is a vertical cross-section of a magazine cell housing a reaction vessel while FIG. 5 is a transparent top view of that cell.

Referring to FIG. 1, a reaction vessel magazine 1 includes multiple (e.g., four) square-cylinder-shaped magazine cells 2 each of which has an opening at each of its two longitudinal ends. As illustrated in FIG. 2, each magazine cell 2 houses a reaction vessel 3, which is used for analysis.

The reaction vessel magazine 1 is formed, for example, by vertically stacking multiple (e.g., four) magazine cells 2 (i.e., reaction vessel containers) with their openings oriented in a lateral direction, creating another (or more) cell stack, and then connecting the two cell stacks together in a lateral direction as viewed from the cell opening side. The openings of the magazine cells 2 on one side are collectively covered and sealed with a protective film 4. Likewise, the openings of the magazine cells 2 on the other side are collectively covered and sealed with a protective film 5 (see FIGS. 4 and 5 as well). In the present embodiment, each cell stack is preferably sealed with one protective film 4 and one protective film 5. It should be noted that, for illustrative purposes, FIG. 1 depicts one protective film 4 being attached.

The protective films 4 and 5 are fabricated, for example, by depositing an aluminum (Al) film on the surface of a PET (polyethylene terephthalate) material, that is, by depositing a thin metal film on the surface of a resin film. As illustrated in FIG. 4, a desiccant container 6 is attached to an inner top section of each magazine cell 2 so that the containers 6 can house desiccants for the purpose of absorbing the moisture inside the magazine cells 2. Due to the cell sealing by the protective films 4 and 5 and also to the moisture absorption by desiccants, the humidity of each magazine cell 2 is kept low.

As illustrated in FIG. 3, each reaction vessel 3 includes the following components: a sample-containing section 3a for containing a sample to be examined; and wings 3b that are held to secure the reaction vessel 3 at a given position of an chemical analyzer. Formed on the surface of the sample-containing section 3a are antibody or antigen spots (or an antibody or antigen layer) which are designed to capture the antigen or antibody of interest contained in the sample when the sample is poured into the sample-containing section 3a.

Referring to FIG. 5, a pair of reaction vessel guides 7 is installed on an inner bottom section of each magazine cell 2 such that each pair sandwiches a reaction vessel 3 from both sides in a lateral direction of a magazine cell 2 (which direction corresponds to a top-bottom direction of FIG. 5). These reaction vessel guides 7 serve to prevent a reaction vessel 3 from laterally moving inside a magazine cell 2.

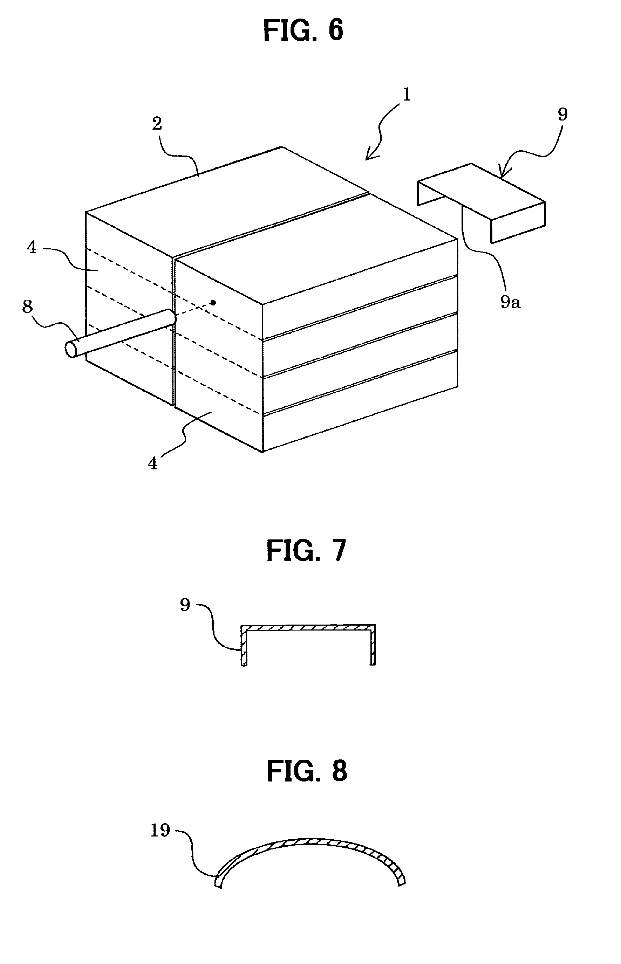

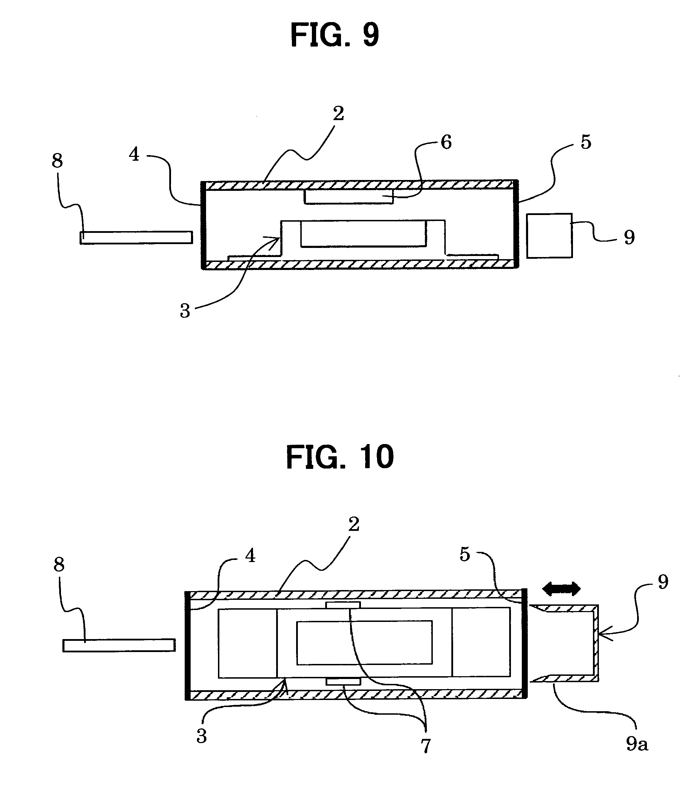

FIG. 6 illustrates the reaction vessel magazine 1 together with the magazine container of a chemical analyzer according to Embodiment 1. FIG. 7 is a cross-section of the blade 9a of a cutter 9 taken along a plane parallel to the protective films 4 and 5. FIGS. 9 and 10 are a vertical cross-section and a transparent top view, respectively, showing the positions of the cutter 9 and a pushrod 8 with respect to a magazine cell 2.

Referring to FIGS. 6, 9, and 10, the chemical analyzer includes the following components: the cutter 9 that faces one opening of a magazine cell 2 of the reaction vessel magazine 1 when the magazine 1 is placed inside the magazine container of the chemical analyzer; the pushrod 8 that faces the other opening of the magazine cell 2; and a drive mechanism, not illustrated, for moving the cutter 9 and the pushrod 8 three-dimensionally. The blade 9a of the cutter 9 is positioned to face the protective film 5. Also, the blade 9a is provided in an aligned manner along the outer surface of the protective film 5 and pushed through the protective film 5 to cut it open.

As illustrated in FIG. 7, the cross-sectional shape of the blade 9a of the cutter 9 as viewed from a magazine cell 2 is such that both ends of a line extend downwardly up to the bottom end of the opening of the magazine cell 2. In other words, the cross-section of the blade 9a as viewed from a magazine cell 2 is shaped like a rectangle without its bottom side. Also, the height of the blade 9a obtained when its bottom end is aligned with the bottom end of a magazine cell 2 is larger than the reaction vessel 3 placed inside that magazine cell 2. In addition, the width between the two lateral sides of the blade 9a is smaller than the width of the magazine cell 2 in a lateral direction (which direction corresponds to a top-bottom direction of FIG. 10) and larger than the width of the reaction vessel 3.

The cutter 9 can also have other cross-sectional shapes as long as: its shape as viewed from a magazine cell 2 is such that both ends of a line extend downwardly up to the bottom end of the opening of the magazine cell 2; the height of the cutter 9 is larger than a reaction vessel 3; and the width between the two lateral sides of the cutter 9 is smaller than the width of a magazine cell 2 in a lateral direction (which direction corresponds to a top-bottom direction of FIG. 10) and larger than the width of a reaction vessel 3. For instance, as illustrated by the cross-section of FIG. 8, a cross-section of the cutter 9 can have an elliptical arc shape.

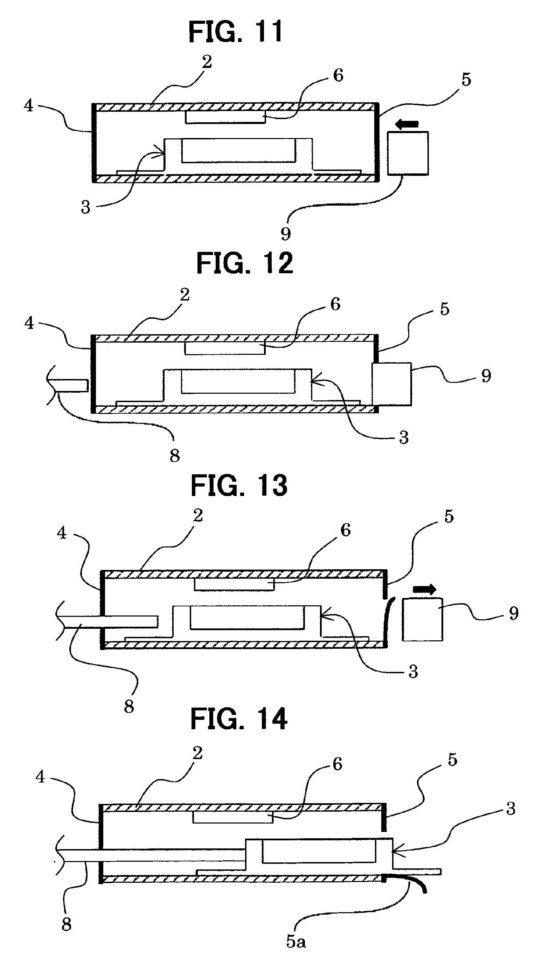

FIGS. 11 through 14 are vertical cross-sections illustrating the process of taking out a reaction vessel 3 from a magazine cell 2.

First, the bottom end of the cutter 9 is aligned with the bottom end of a particular magazine cell 2. The cutter 9 is then moved toward the magazine cell 2 so that the blade 9a of the cutter 9 can penetrate the protective film 5 of the magazine cell 2 to cut the cell 2 open (see FIGS. 11 and 12).

The cutter 9 is then pulled back. Thereafter, the pushrod 8 is moved toward the magazine cell 2 to cause the pushrod 8 to penetrate the protective film 4, thereby putting the pushrod 8 into the magazine cell 2 (see FIG. 13).

The pushrod 8 is inserted deep into the magazine cell 2, thereby pushing out the reaction vessel 3 located inside the cell 2 through the cut protective film 5 (see FIG. 14). It is to be noted that, although not illustrated, a reaction vessel transfer mechanism is placed where the reaction vessel 3 is to be pushed out, so that the transfer mechanism can transfer the reaction vessel 3 to a particular location within the chemical analyzer.

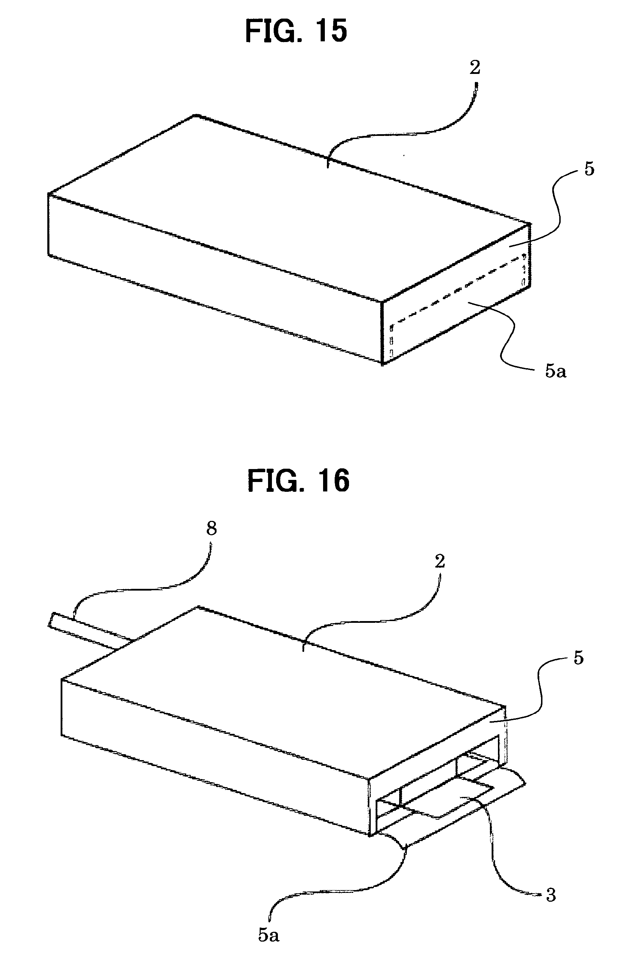

FIGS. 15 and 16 are perspective views depicting a reaction vessel 3 being taken out of a magazine cell 2. As illustrated in FIG. 15, the protective film 5 of the magazine cell 2 is cut by the cutter 9, forming a cut portion 5a (first stage). When the pushrod 8 pushes the reaction vessel 3 toward the protective film 5 as illustrated in FIG. 16, the reaction vessel 3 will start to push the cut portion 5a aside and eventually move out of the magazine cell 2 (second stage).

As described above, Embodiment 1 is designed such that the cutter 9 is provided in such a way as to face one opening of a magazine cell 2 so as to cut the protective film 5 of the cell 2, and the pushrod 8 is provided in such a way as to face the other opening of the cell 2 so as to push out the reaction vessel 3 placed inside the cell 2 from the other opening of the cell 2. Thus, during removal of the reaction vessel 3 from the magazine cell 2, the antibody or antigen layer on the reaction vessel 3 can be prevented from being damaged.

### Embodiment 2

In Embodiment 2, the penetration angle of the cutter 9 with respect to a magazine cell 2 is changed from that adopted in Embodiment 1, and the protective film 5 is cut at the changed penetration angle.

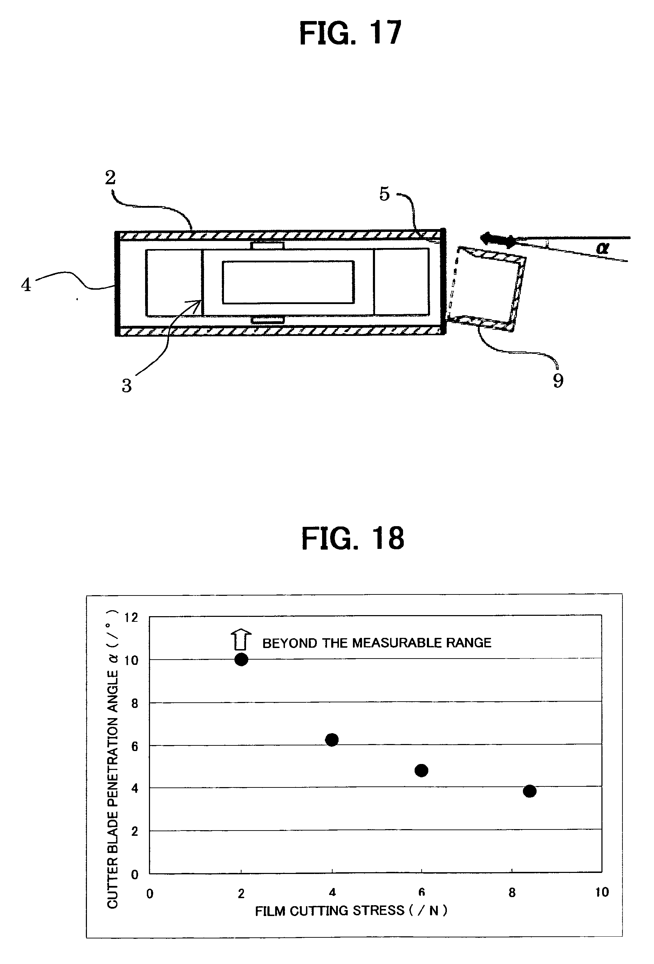

FIG. 17 illustrates the penetration angle of the cutter 9 with respect to a magazine cell 2 according to Embodiment 2. FIG. 18 is a graph showing the relationship between the penetration angle of the cutter 9 and the stress applied to the protective film 5 during film cutting. Note that in FIG. 17, the same components as those used in Embodiment 1 are assigned the same reference numerals and will not be described further.

As illustrated in FIG. 17, the cutter 9 is slanted at an angle α with respect to a longitudinal direction of a magazine cell 2. This implies that the blade 9a of the cutter 9 comes into contact with the protective film 5 with the angle between the two being α degrees.

As shown in FIG. 18, an increase in the penetration angle α of the cutter 9 results in a decrease in the stress applied to the protective film 5 when the film 5 is cut by the cutter 9. The stress is small especially when the penetration angle α is equal to or greater than 3 degrees. In the present embodiment, therefore, the penetration angle α is set equal to or greater than 3 degrees.

The thus-formulated Embodiment 2 leads to the same advantages of Embodiment 1.

In addition, Embodiment 2 reduces the drive force required to move the cutter 9 during the cutting of the protective film 5, resulting in a smaller load on the drive mechanism and prevention of its failure.

### Embodiments 3 and 4

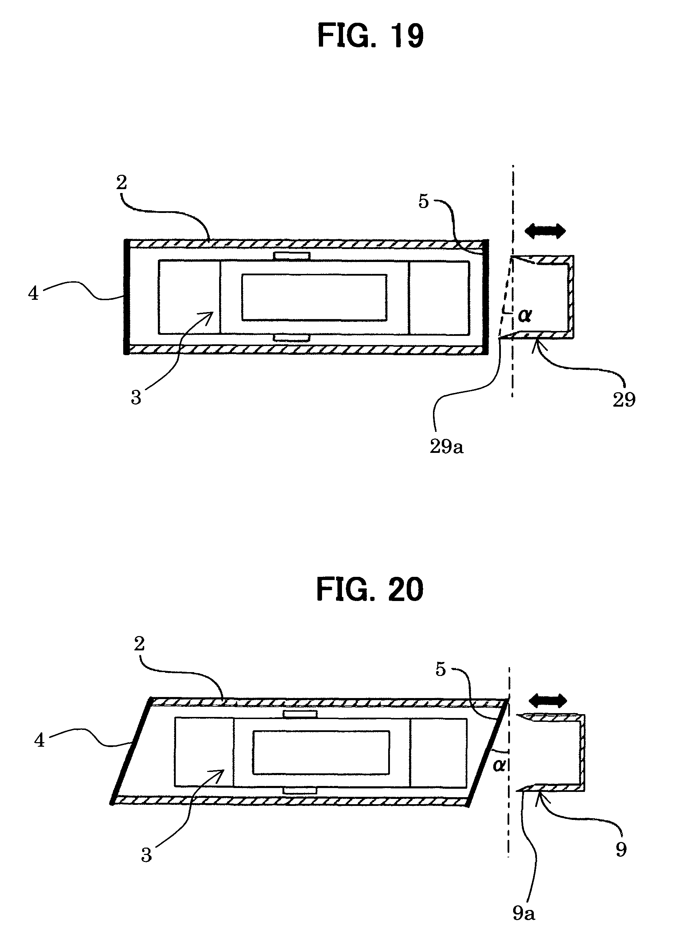

As described above, Embodiment 2 is designed such that the cutter 9 is slanted at an angle α with respect to a longitudinal direction of a magazine cell 2, thereby cutting the protective film 5 at that penetration angle α. However, the invention is not limited thereto, and various modifications can be made within the spirit of the invention. That is, varying the penetration angle α of the cutter 9 with respect to a magazine cell 2 allows reduction of the stress applied to the protective film 5 when the film 5 is cut by the cutter 9. FIGS. 19 and 20 illustrate such modifications as Embodiments 3 and 4 of the invention. Note that in FIGS. 19 and 20, the same components as those shown in FIG. 17 are assigned the same reference numerals and will not be described further.

As illustrated by Embodiment 3 of FIG.19, a cutter 29 includes a blade 29a that has an angle α with respect to the protective film 5. The thus-formulated Embodiment 3 leads to the same advantages of Embodiment 2.

Likewise, as illustrated by Embodiment 4 of FIG. 20, an opening of a magazine cell 12 and the protective film 5 are slanted at an angle α with respect to the blade 9a of the cutter 9. The thus-formulated Embodiment 3 also leads to the same advantages of Embodiment 2.

### Other Embodiments

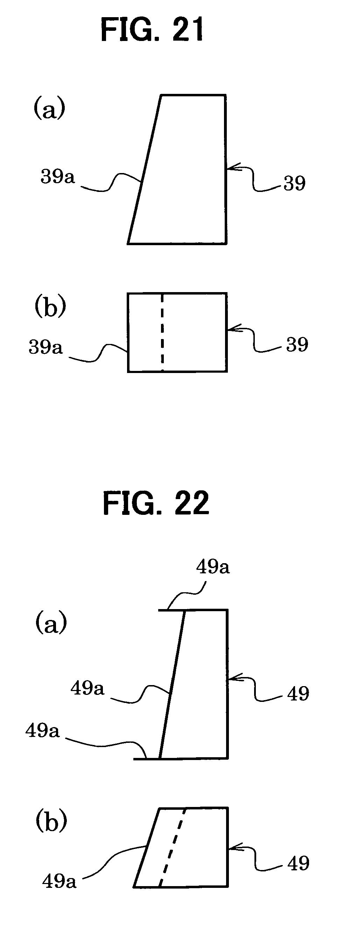

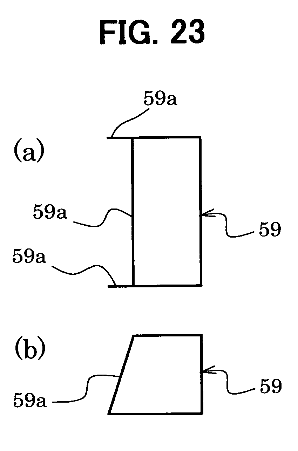

The above-described embodiments can be modified in various manners within the spirit of the invention. FIGS. 21 to 23 illustrate some examples of modification. FIGS. 21, 22, and 23 are diagrams illustrating the structures of cutters 39, 49, and 59, respectively. Note that FIGS. 21(a), 22(a), and 23(a) are top views while FIGS. 21(b), 22(b), and 23(b) are side views. The cutter 39 of FIG. 21, for example, can reduce the stress applied to the protective film 5 during film cutting, by allowing the penetration angle α of its upper blade 39a to be changed with respect to the protective film 5 (Embodiment 5). Also, the cutter 49 of FIG. 22 can reduce the stress applied during film cutting, by allowing the penetration angles α of its upper blade 49a and side blades 49a to be changed with respect to the protective film 5 (Embodiment 6). Further, the cutter 59 of FIG. 23 can reduce the stress applied during film cutting, by allowing the penetration angles α of its side blades 59a to be changed with respect to the protective film 5 (Embodiment 7).

### Description of Reference Numerals

- 1:: Reaction vessel magazine
- 2,: 12: Magazine cell
- 3:: Reaction vessel
- 4, 5:: Protective film
- 6:: Desiccant container
- 7:: Reaction vessel guide
- 8:: Pushrod
- 9:: Cutter

## Claims

1. A chemical analyzer that performs analysis by putting a sample and a reagent into a reaction vessel, the chemical analyzer comprising:
a container for containing a reaction vessel magazine having multiple magazine cells, each of the magazine cells having an opening at each of its two ends and housing a reaction vessel, the openings being sealed with protective films;
a cutter, positioned to face one of the openings of a magazine cell, for cutting one of the protective films of the magazine cell; and
pushing means, positioned to face the other opening of the magazine cell, for penetrating the other protective film of the magazine cell and pushing out the reaction vessel housed in the magazine cell through the opening the cutter faces.

2. The chemical analyzer of claim 1 wherein the cutter includes a blade that is provided in an aligned manner along the protective film that covers the opening the cutter faces and shaped such that both ends of a line extend downwardly up to the bottom end of that opening.

3. The chemical analyzer of claim 2 wherein the blade of the cutter cuts the protective film that covers the opening the cutter faces, with the angle between the blade and said protective film being equal to greater than 3 degrees.

4. The chemical analyzer of claim 2 wherein a cross-section of the blade of the cutter taken along a plane parallel to the protective films is shaped like a rectangle without its bottom side.

5. The chemical analyzer of claim 2 wherein a cross-section of the blade of the cutter taken along a plane parallel to the protective films is shaped like an upwardly-curving elliptical arc.
